(19) Europäisches Patentamt / European Patent Office / Office européen des brevets

(11) **EP 4 383 372 A1**

(12) **EUROPEAN PATENT APPLICATION**
published in accordance with Art. 153(4) EPC

(43) Date of publication:
**12.06.2024  Bulletin 2024/24**

(21) Application number: **22867740.7**

(22) Date of filing: **08.09.2022**

(51) International Patent Classification (IPC):
**H01M 4/525** (2010.01)    **H01M 4/505** (2010.01)
**H01M 4/36** (2006.01)    **H01M 4/62** (2006.01)
**H01M 10/052** (2010.01)    **C01G 53/00** (2006.01)

(52) Cooperative Patent Classification (CPC):
**C01G 53/006; C01G 53/50; H01M 4/131;**
**H01M 4/366; H01M 4/505; H01M 4/525;**
**H01M 4/62;** C01P 2002/72; C01P 2004/61;
C01P 2004/62; C01P 2006/11; C01P 2006/12;
H01M 2004/021; H01M 2004/028; Y02E 60/10

(86) International application number:
**PCT/KR2022/013556**

(87) International publication number:
**WO 2023/038472 (16.03.2023 Gazette 2023/11)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **10.09.2021  KR 20210121307**

(71) Applicant: **LG Energy Solution, Ltd.**
**Seoul 07335 (KR)**

(72) Inventors:
• **HEO, Jong Wook**
  **Daejeon 34122 (KR)**
• **JUNG, Wang Mo**
  **Daejeon 34122 (KR)**
• **JO, Chi Ho**
  **Daejeon 34122 (KR)**
• **YOO, Tae Gu**
  **Daejeon 34122 (KR)**
• **HWANG, Jin Tae**
  **Daejeon 34122 (KR)**
• **JUNG, Hae Jung**
  **Daejeon 34122 (KR)**
• **CHO, Hyeon Jin**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL POWDER FOR LITHIUM SECONDARY BATTERY, METHOD FOR PREPARING SAME, POSITIVE ELECTRODE FOR LITHIUM SECONDARY BATTERY, AND LITHIUM SECONDARY BATTERY**

(57)    The present invention relates to a positive electrode active material powder for a lithium secondary battery, which includes a lithium composite transition metal oxide in the form of a single particle consisting of one nodule, or a pseudo-single particle, which is a composite of 30 or less nodules, where the positive electrode active material powder satisfies Expression 1:

[Expression 1]

$$0.5 \leq D_{mean} \times d_{press} / D_{50} \leq 3$$

Where $D_{mean}$ is an average particle diameter of the nodules as measured using an electron backscatter diffraction (EBSD) pattern analyzer,
$d_{press}$ is a press density measured after 5 g of the positive electrode active material powder is input into a circular mold with a diameter of 2 cm and pressurized at a pressure of 2000 kgf, and
$D_{50}$ is a value corresponding to a cumulative volume of 50% in the particle size distribution of the positive electrode active material powder, and
a positive electrode and lithium secondary battery including the same.

EP 4 383 372 A1

[FIG. 1]

**Description**

<u>TECHNICAL FIELD</u>

This application claims priority to and the benefit of Korean Patent Application No. 10-2021-0121307, filed on September 10, 2021, the disclosure of which is incorporated herein by reference in its entirety.

The present invention relates to a positive electrode active material powder for a lithium secondary battery, a method of preparing the same, a positive electrode for a lithium secondary battery, and a lithium secondary battery, and more specifically, to a positive electrode active material powder including a lithium composite transition metal oxide in the form of a single particle and/or a pseudo-single particle, and a positive electrode and lithium secondary battery including the same.

<u>BACKGROUND ART</u>

Lithium secondary batteries generally consist of a positive electrode, a negative electrode, a separator, and an electrolyte, and the positive electrode and the negative electrode include active materials that enable the intercalation and deintercalation of lithium ions.

As the positive electrode active material of the lithium secondary battery, lithium cobalt oxides ($LiCoO_2$), lithium nickel oxides ($LiNiO_2$), lithium manganese oxides ($LiMnO_2$, $LiMnO_4$, etc.), lithium iron phosphate compounds ($LiFePO_4$), and the like have been used. Among those listed above, the lithium cobalt oxide has high operating voltage and excellent capacity characteristics, but it is difficult to commercially apply the lithium cobalt oxide to large-capacity batteries because cobalt, which is a raw material of the lithium cobalt oxide, is expensive and unstably supplied. The lithium nickel oxide has poor structural stability, and thus it is difficult to implement sufficient lifetime characteristics. Meanwhile, the lithium manganese oxide has excellent stability, but capacity characteristics are poor. Accordingly, lithium composite transition metal oxides including at least two types of transition metals have been developed to compensate for the disadvantages of lithium transition metal oxides including Ni, Co, or Mn alone, and particularly, lithium nickel cobalt manganese oxides including Ni, Co, and Mn have been widely used in the field of batteries for electric vehicles.

Conventional lithium nickel cobalt manganese oxides are generally in the form of a spherical secondary particle in which several tens to several hundreds of primary particles are agglomerated. In the case of the lithium nickel cobalt manganese oxides in the form of a secondary particle in which many primary particles are agglomerated, the detachment of primary particles, that is, the breakage of particles, easily occurs in a rolling process in the manufacture of a positive electrode, and cracks are generated inside particles in a charging/discharging process. When the breakage or cracking of positive electrode active material particles occurs, a contact area with an electrolyte is increased to increase gas generation and deterioration of the active material, which are caused by a side reaction with an electrolyte, and accordingly, lifetime characteristics are degraded.

In addition, recently, there is an increasing demand for high-output high-capacity batteries such as batteries for electric vehicles, and accordingly, a nickel content in the positive electrode active material is gradually increasing. When a nickel content in the positive electrode active material increases, initial capacity characteristics are improved, but a large amount of highly reactive $Ni^{+4}$ ions are produced as charging and discharging are repeated, and thus the structure of the positive electrode active material collapses. As a result, a deterioration rate of the positive electrode active material increases, and thus lifetime characteristics and battery stability are degraded.

<u>DISCLOSURE OF THE INVENTION</u>

<u>TECHNICAL PROBLEM</u>

The present invention has been made to solve the above problems and is directed to providing a positive electrode active material capable of suppressing the breakage and cracking of particles in an electrode manufacturing process and a charging/discharging process.

The present invention is also directed to providing a positive electrode and lithium secondary battery whose high-temperature lifetime characteristics, high-temperature storage characteristics, and initial resistance characteristics are improved by including the positive electrode active material.

<u>TECHNICAL SOLUTION</u>

One aspect of the present invention provides a positive electrode active material powder for a lithium secondary battery, which includes a lithium composite transition metal oxide in the form of a single particle consisting of one nodule, and/or a pseudo-single particle which is a composite of 30 or less nodules, and satisfies the following Expression 1:

[Expression 1]

$$0.5 \leq D_{mean} \times d_{press} / D_{50} \leq 3$$

wherein $D_{mean}$ is an average particle diameter of the nodulesas measured using an electron backscatter diffraction (EBSD) pattern analyzer,

$d_{press}$ is a press density measured after 5 g of the positive electrode active material powder is input into a circular mold with a diameter of 2 cm and pressurized at a pressure of 2000 kgf, and

$D_{50}$ is a value corresponding to a cumulative volume of 50% in the particle size distribution of the positive electrode active material powder.

Another aspect of the present invention provides a positive electrode which includes the positive electrode active material powder according to the present invention.

Still another aspect of the present invention provides a lithium secondary battery which includes the positive electrode according to the present invention.

**ADVANTAGEOUS EFFECTS**

Since the positive electrode active material powder for a lithium secondary battery according to the present invention includes a lithium composite transition metal oxide in the form of a single particle and/or a pseudo-single particle, which has excellent particle strength, particle breakage or cracking caused by a rolling process in the manufacture of an electrode is reduced. Accordingly, gas generation and deterioration of the positive electrode active material, which are caused by a side reaction with an electrolyte, are reduced, and thus excellent lifetime characteristics and high-temperature characteristics can be realized.

In addition, since the positive electrode active material powder for a lithium secondary battery according to the present invention satisfies specific levels of a particle size and roll density, the breakage of particles in an electrode manufacturing process is minimized to reduce gas generation, and a change in a crystal structure in a charging/discharging process is minimized, and thus high-temperature lifetime characteristics and high-temperature storage characteristics can be excellent.

**BRIEF DESCRIPTION OF THE DRAWINGS**

Since the drawings attached to the present specification illustrate exemplary embodiments of the present invention and serve to facilitate understanding of the technical idea of the present invention together with the above-described content of the invention, the present invention should not be limitedly interpreted on the basis of the drawings. Meanwhile, the shape, size, scale, or ratio of elements in the drawings included in this specification may be exaggerated in order to emphasize a clearer description.

FIG. 1 is a scanning electron microscope (SEM) image of a positive electrode active material powder prepared in Example 1.

FIG. 2 is an SEM image of a positive electrode active material powder prepared in Comparative Example 1.

FIG. 3 is a graph showing the rate of change in the full width at half maximum (FWHM) of a (003) peak for a coin cell to which a positive electrode active material powder prepared in Example 1 is applied according to a state of charge (SOC).

FIG. 4 is a graph showing the (003) peak FWHM change rate of a positive electrode active material prepared in Comparative Example 1 according to an SOC.

FIG. 5 is a graph showing a cell volume variation when batteries to which respective positive electrode active materials prepared in Example 1 and Comparative Example 1 are applied are stored at a high temperature.

FIG. 6 is a graph showing the capacity retention rate of batteries including respective positive electrode active materials prepared in Example 1 and Comparative Example 1 according to the number of cycles.

**MODE FOR CARRYING OUT THE INVENTION**

Terms and words used in this specification and the claims should not be interpreted as being limited to commonly used meanings or meanings in dictionaries and should be interpreted with meanings and concepts which are consistent with the technological scope of the invention based on the principle that the inventors can appropriately define concepts of terms in order to describe the invention in the best way.

It should be understood that the terms "comprises," "comprising," "includes," "including," "has," and/or "having," when used herein, specify the presence of stated features, integers, steps, components or combinations thereof, but do not preclude the presence or addition of one or more other features, integers, steps, components or combinations thereof.

In the present disclosure, "single particle" is a particle consisting of a single nodule. A "nodule" according to the present disclosure refers to particle unit body constituting a single particle and a pseudo-single particle. The nodule may be a single crystal lacking any crystalline grain boundary, or alternatively that may be a polycrystal in which grain boundaries do not appear when observed in a field of view of 5000x to 20000x using a scanning electron microscope (SEM). In the present disclosure, a "pseudo-single particle" refers to a particle which is a composite formed of 30 or less nodules.

In the present disclosure, a "secondary particle" refers to a particle formed by agglomeration of several tens to several hundreds of primary particles. More specifically, a secondary particle is an agglomerate of 50 primary particles or more.

In the present disclosure, when a "particle" is described, any one or all of a single particle, a pseudo-single particle, a primary particle, a nodule, and a secondary particle may be encompassed.

In the present invention, "$D_{mean}$" refers to the average particle diameter of the nodules as measured using an electron backscatter diffraction (EBSD) pattern analyzer. EBSD analysis is conducted by manufacturing an electrode using a positive electrode active material powder to be measured, cutting the electrode through ion milling (HITACHI IM-500, accelerating voltage: 6 kV) before a rolling process to obtain a cross section, and measuring the cross section using a FE-SEM device (JEOL JSM-7900F). In this case, the measurement is made under the condition of an accelerating voltage of 15 kV and a W.D. of 15 mm on a scale of about $400 \pm 10$ primary particles.

In the present invention, "$D_{50}$" refers to a particle size corresponding to a cumulative volume of 50% in the particle size distribution of a positive electrode active material powder. The average particle diameter ($D_{50}$) may be measured by a laser diffraction method. For example, the average particle diameter may be measured by dispersing a positive electrode active material powder in a dispersion medium, inputting the resultant into a commercially available laser diffraction particle size analyzer (e.g., Microtrac MT 3000), performing irradiation with ultrasonic waves at a frequency of about 28 kHz and an output of 60 W, obtaining a volume-cumulative particle size distribution graph, and determining a particle size corresponding to a cumulative volume of 50%.

In the present invention, "$d_{press}$" refers to a press density of the positive electrode active material powder measured using HPRM-1000. Specifically, the press density may be obtained by inputting 5 g of a positive electrode active material powder into a cylinder-shaped mole, pressurizing the positive electrode active material powder-containing mold at a pressure of 2000 kgf, and measuring the height of the pressurized mold using a Vernier caliper.

In the present invention, a "specific surface area" may be measured by a BET method. Specifically, the specific surface area may be calculated from the amount of nitrogen gas adsorbed at a liquid nitrogen temperature (77 K) using BELSORP-mini II (commercially available from BEL Japan).

Hereinafter, the present invention will be described in further detail.

### Positive electrode active material powder

A positive electrode active material powder according to the present invention includes a lithium composite transition metal oxide in the form of a single particle consisting of one nodule or a pseudo-single particle which is a composite of 30 or less nodules, preferably 2 to 20 nodules, and more preferably 2 to 10 nodules.

Since the lithium composite transition metal oxide in the form of a single particle and/or a pseudo-single particle has higher particle strength than a conventional lithium composite transition metal oxide in the form of a secondary particle in which several tens to several hundreds of primary particles are agglomerated, particles are less broken in rolling.

In addition, since the lithium composite transition metal oxide in the form of a single particle or a pseudo-single particle according to the present invention has a small number of sub-parts (i.e. nodules) constituting the single particles and/or pseudo-single particles, changes resulting from the volume expansion/contraction of the sub-parts (i.e. nodules) during charging and discharging are small, and accordingly, the generation of cracks inside the particles is substantially reduced.

In particular, the inventors of the present invention have found that, when a positive electrode active material powder satisfying the following Expression 1 is used, the breakage of particles in an electrode manufacturing process is minimized to reduce gas generation, and a change in a crystal structure in a charging/discharging process is minimized, and thus initial resistance characteristics, high-temperature lifetime characteristics, and high-temperature storage characteristics can be enhanced.

[Expression 1]

$$0.5 \leq D_{mean} \times d_{press} / D_{50} \leq 3$$

wherein $D_{mean}$ is an average particle diameter of the nodules within the positive electrode active material powder as measured using an electron backscatter diffraction (EBSD) pattern analyzer, $d_{press}$ is a press density measured after 5 g of the positive electrode active material powder is input into a circular mold with a diameter of 2 cm and pressurized at a pressure of 2000 kgf, and $D_{50}$ is a value corresponding to a cumulative volume of 50% in the particle size distribution of the positive electrode active material powder.

When a value of $D_{mean} \times d_{press} / D_{50}$ is less than 0.5, particles are severely broken in a process of rolling a positive electrode or a process of charging and discharging a lithium secondary battery, and thus gas generation increases at a high temperature, and lifetime characteristics are degraded. On the other hand, when a value of $D_{mean} \times d_{press} / D_{50}$ exceeds 3, the initial resistance of a lithium secondary battery increases. More preferably, a value of $D_{mean} \times d_{press} / D_{50}$ may be 0.8 to 3 or 1 to 3.

Meanwhile, the positive electrode active material powder according to the present invention may have a rate of change in the full width at half maximum (FWHM) of a (003) peak of 25% or less, preferably 20% or less, and more preferably 3 to 15% during charging and discharging.

The (003) peak FWHM change rate (units: %) may be defined by the following Expression 2.

(003) peak FWHM change rate = [{(003) peak FWHM at SOC 60% - (003) peak FWHM at SOC 0%} / {(003 peak FWHM at SOC 0%}] x 100                  [Expression 2]

The (003) peak FWHM change rate may be measured by an X-ray diffraction method, specifically, by the following method.

An electrode is manufactured using the positive electrode active material powder and then assembled to form an experimental coin cell for operando XRD with a Kapton film window. XRD measurement is made by 2-theta scanning in a transmission mode using Mo-target X-rays. A 1st slit of 1/4 degree, a Soller slit (both 1st and 2nd) of 0.02 rad, and a 2nd mask of 1.68 mm are used. The 7 degrees to 30 degrees area in 2-theta is measured every 0.014 degree so that it is about 6 minutes per scan. During measurement, charging and discharging proceeds at a slow rate of 0.05C to maintain a state close to equilibrium, measurement is made up to 4.25 V, the CV state is maintained for an hour, and then discharging is performed up to 2.5 V Analysis of FWHM up to SOC 60% is possible. In this case, FWHM is a numerical value derived by fitting through whole patterns (multiple peaks) using only crystal system information rather than a complete structure model, and a split pseudo-Voigt function is used for fitting.

The low (003) peak FWHM change rate represented by Expression 2 of 25% or less means that a strain change in the crystal structure of the positive electrode active material is small during charging and discharging. Accordingly, the deterioration of the positive electrode active material is reduced, and thus excellent lifetime characteristics may be implemented.

Meanwhile, the positive electrode active material according to the present invention may include a lithium composite transition metal oxide, specifically, a lithium composite transition metal oxide having a composition represented by the following Chemical Formula 1.

[Chemical Formula 1]        $Li_{1+x}Ni_aCo_bM^1_cM^2_dO_2$

In Chemical Formula 1, $M^1$ is Mn, Al, or a combination thereof, $M^2$ is one or more selected from the group consisting of W, Zr, Y, Ba, Ca, Ti, Mg, Ta, and Nb, and $0 \leq x \leq 0.5$, $0.8 \leq a < 1$, $0 < b < 0.2$, $0 < c < 0.2$, and $0 \leq d \leq 0.05$ are satisfied.

In Chemical Formula 1, $M^1$ is Mn, Al, or a combination thereof, preferably, Mn or a combination of Mn and Al, and $M^2$ is one or more selected from the group consisting of Zr, W, Y, Ba, Ca, Ti, Mg, Ta, and Nb, preferably one or more selected from the group consisting of Zr, Y, Mg, and Ti, and more preferably Zr, Y, or a combination thereof. Although the $M^2$ element is not necessarily included, when an appropriate amount of the $M^2$ element is included, it may serve to promote grain growth during firing or enhance the stability of a crystal structure.

1+x represents a mole fraction of lithium in the lithium composite transition metal oxide and x may satisfy $0 \leq x \leq 0.5$, $0 \leq x \leq 0.3$, or $0 \leq x \leq 0.2$.

a represents a mole fraction of nickel among all metals excluding lithium in the lithium composite transition metal oxide and may satisfy $0.8 \leq a < 1$, $0.8 < a \leq 0.95$, or $0.82 \leq a \leq 0.95$.

b represents a mole fraction of cobalt among all metals excluding lithium in the lithium composite transition metal oxide and may satisfy 0<b<0.2, 0.01≤b<0.2, or 0.01≤b≤0.15.

c represents a mole fraction of $M^1$ among all metals excluding lithium in the lithium composite transition metal oxide and may satisfy 0<c<0.2, 0.01≤c<0.2, or 0.01≤c≤0.15.

d represents a mole fraction of $M^2$ among all metals excluding lithium in the lithium composite transition metal oxide and may satisfy 0≤d≤0.05, 0≤d≤0.02, or 0≤d≤0.01.

The positive electrode active material powder according to the present invention may include nodules having an average particle diameter ($D_{mean}$) of 0.5 to 3.5 μm. Specifically, the $D_{mean}$ may be 0.5 μm or more, 1.0 μm or more, or 1.5 μm or more, and the $D_{mean}$ may be 3.5 μm or less, 3 μm or less, 2.5 μm or less, or 2.0 μm or less. When the average particle diameter ($D_{mean}$) of the nodules is less than 0.5 μm, the specific surface area of the entire positive electrode active material is increased, and thus a side reaction with an electrolyte may be increased. On the other hand, when the $D_{mean}$ exceeds 3.5 μm, lithium mobility in the positive electrode active material is decreased, and thus the output characteristics of a battery may be degraded.

The positive electrode active material powder according to the present invention may have a press density ($d_{press}$) of 3 g/cc or more, preferably 3 to 5 g/cc or 3 to 4 g/cc, and more preferably 3 to 3.5 g/cc as measured after 5 g of the positive electrode active material powder is input into a circular mold with a diameter of 2 cm and pressurized at a pressure of 2000 kgf. When the press density of the positive electrode active material powder satisfies the above-described range, high energy density can be implemented.

The positive electrode active material powder according to the present invention may have a $D_{50}$, which is a value corresponding to a cumulative volume of 50% in the particle size distribution of the powder, of 2 to 10 μm. Specifically, the $D_{50}$ may be 2 μm or more, 3 μm or more, 4 μm or more, 5 μm or more, or 6 μm or more and the $D_{50}$ may be 10 μm or less, 9 μm or less, 8 μm or less, or 7 μm or less. When the $D_{50}$ is less than 2 μm, the specific surface area of the entire positive electrode active material is increased, and thus a side reaction with an electrolyte may be increased. On the other hand, when the $D_{50}$ exceeds 10 μm, lithium mobility in the positive electrode active material is decreased, and thus the output characteristics of a battery may be degraded.

Meanwhile, the lithium composite transition metal oxide may further include a coating layer including one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si, and S on the particle surface thereof.

When the coating layer is present on the surface of lithium composite transition metal oxide particles, contact between an electrolyte and the lithium composite transition metal oxide is suppressed by the coating layer, and accordingly, the elution of a transition metal or gas generation, which is caused by a side reaction with an electrolyte, can be reduced.

Preferably, the coating layer may include Co as a coating element. When a coating layer including Co is formed on the particle surface of the lithium composite transition metal oxide in the form of a single particle and/or a pseudo-single particle, a side reaction with an electrolyte can be suppressed, and output can also be improved.

Meanwhile, the positive electrode active material powder according to the present invention may have a BET specific surface area of 0.1 to 1 $m^2/g$, preferably 0.3 to 1 $m^2/g$, and more preferably 0.5 to 1 $m^2/g$. When the BET specific surface area of the positive electrode active material powder satisfies the above-described range, a side reaction with an electrolyte can be appropriately controlled, and a certain level of lithium ion mobility at an interface between the positive electrode active material and an electrolyte can be ensured.

## Method of preparing positive electrode active material

Next, a method of preparing the positive electrode active material powder according to the present invention will be described.

A method of preparing the positive electrode active material powder according to the present invention includes the steps of: (S1) adding a transition metal-containing solution including nickel (Ni), cobalt (Co), and a $M^1$ cation, a basic aqueous solution, and an ammonium solution and performing co-precipitation to prepare a positive electrode active material precursor; and (S2) mixing the positive electrode active material precursor and a lithium raw material and thermally treating the resulting mixture to prepare a positive electrode active material powder.

In addition, the prepared positive electrode active material powder includes a lithium composite transition metal oxide in the form of a single particle consisting of one nodule and/or a pseudo-single particle which is a composite of 30 or less nodules, and satisfies the following Expression 1:

[Expression 1]

$$0.5 \leq D_{mean} \times d_{press} / D_{50} \leq 3$$

wherein $D_{mean}$ is an average particle diameter of the nodules as measured using an electron backscatter diffraction (EBSD) pattern analyzer, $d_{press}$ is a press density measured after 5 g of the positive electrode active material powder is input into a circular mold with a diameter of 2 cm and pressurized at a pressure of 2000 kgf, and $D_{50}$ is a value corresponding to a cumulative volume of 50% in the particle size distribution of the positive electrode active material powder.

For Expression 1, since the above-described description is equally applied, a redundant description will be omitted.

Hereinafter, each step of the method of preparing the positive electrode active material powder will be described in detail.

First, a transition metal-containing solution including nickel (Ni), cobalt (Co), and a $M^1$ cation is prepared. For example, the transition metal-containing solution may include a nickel-containing raw material, a cobalt-containing raw material, and a $M^1$-containing raw material, and the $M^1$-containing raw material may be a manganese-containing raw material and/or an aluminum-containing raw material.

Afterward, the transition metal-containing solution may be subjected to co-precipitation by adding an ammonium cation-containing complex-forming agent and a basic aqueous solution to prepare a positive electrode active material precursor.

The nickel-containing raw material may be, for example, a nickel-containing acetate, nitrate, sulfate, halide, sulfide, hydroxide, oxide, oxyhydroxide, or the like, specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a nickel salt of a fatty acid, a nickel halide, or a combination thereof, but the present invention is not limited thereto.

The cobalt-containing raw material may be, for example, a cobalt-containing acetate, nitrate, sulfate, halide, sulfide, hydroxide, oxide, oxyhydroxide, or the like, specifically, $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but the present invention is not limited thereto.

The manganese-containing raw material may be, for example, a manganese-containing acetate, nitrate, sulfate, halide, sulfide, hydroxide, oxide, oxyhydroxide, or a combination thereof, specifically, a manganese oxide such as $Mn_2O_3$, $MnO_2$, $Mn_3O_4$, or the like; a manganese salt such as $MnCO_3$, $Mn(NO_3)_2$, $MnSO_4$, manganese acetate, manganese dicarboxylate, manganese citrate, or a manganese salt of a fatty acid; manganese oxyhydroxide, manganese chloride, or a combination thereof, but the present invention is not limited thereto.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, an aluminum halide, or a combination thereof.

The transition metal-containing solution may be prepared by adding a nickel-containing raw material, a cobalt-containing raw material, and a $M^1$-containing raw material to a solvent, specifically, water or a solvent mixture of water and an organic solvent (e.g., alcohol, etc.) uniformly mixable with water or by mixing an aqueous solution of a nickel-containing raw material, an aqueous solution of a cobalt-containing raw material, and an aqueous solution of a $M^1$-containing raw material.

The ammonium cation-containing complex-forming agent may be, for example, $NH_4OH$, $(NH_4)_2SO_4$, $NH_4NO_3$, $NH_4Cl$, $CH_3COONH_4$, $NH_4CO_3$, or a combination thereof, but the present invention is not limited thereto. Meanwhile, the ammonium cation-containing complex-forming agent may be used in the form of an aqueous solution, and in this case, water or a mixture of water and an organic solvent (specifically, alcohol, etc.) uniformly mixable with water may be used as a solvent.

The basic compound may be a hydroxide of an alkali metal or alkaline earth metal such as $NaOH$, $KOH$, or $Ca(OH)_2$, a hydrate thereof, or a combination thereof. The basic compound may also be used in the form of an aqueous solution, and in this case, water or a mixture of water and an organic solvent (specifically, alcohol, etc.) uniformly mixable with water may be used as a solvent.

The basic compound is added to adjust the pH of a reaction solution and may be added in an amount such that the pH of a metal solution becomes 8 to 12.

The co-precipitation may be performed under an inert atmosphere such as a nitrogen or argon atmosphere at a temperature ranging from 35 °C to 80 °C.

Accordingly, a positive electrode active material precursor including nickel, cobalt, and a $M^1$ cation may be prepared.

Positive electrode active material precursor particles formed of a nickel-cobalt-$M^1$ hydroxide are produced by the above-described process and precipitated in a reaction solution. By adjusting the concentration of the nickel-containing raw material, cobalt-containing raw material, and $M^1$-containing raw material, a positive electrode active material precursor having a nickel (Ni) content accounting for 80 mol% or more, preferably, 82 mol% or more of the total metal content may be prepared. The precipitated positive electrode active material precursor particles may be separated by a typical method and dried to prepare a positive electrode active material precursor.

Meanwhile, the prepared positive electrode active material precursor may have a tap density of 2.2 g/cc or less, preferably 1.2 to 2.1 g/cc, and more preferably 1.4 to 2.0 g/cc. When the tap density of the positive electrode active material precursor satisfies the above-described range, a lithium composite transition metal oxide in the form of a single particle and/or a pseudo-single particle is easily formed, and the size of nodules is appropriately adjusted, and thus a positive electrode active material powder satisfying Expression 1 can be formed. When the tap density of the positive electrode active material precursor is varied outside of the above-described range, the lithium composite transition metal oxide having a desired form may not be necessarily be formed, as the formation of single particles and pseudo-single particles is dependent on process conditions. Rather, if a tap density is outside of the described range, an active material in the form of a secondary particle may be formed instead.

Afterward, the positive electrode active material precursor and a lithium raw material are mixed and thermally treated.

As the lithium raw material, a lithium-containing sulfate, nitrate, acetate, carbonate, oxalate, citrate, halide, hydroxide, or oxyhydroxide may be used, and the lithium raw material is not particularly limited as long as it is able to be dissolved in water. Specifically, the lithium raw material may be $Li_2CO_3$, $LiNO_3$, $LiNO_2$, LiOH, $LiOH \cdot H_2O$, LiH, LiF, LiCl, LiBr, LiI, $CH_3COOLi$, $Li_2O$, $Li_2SO4$, $CH_3COOLi$, $Li_3C_6H_5O_7$, or the like, which may be used alone or in combination of two or more thereof.

The positive electrode active material precursor and the lithium raw material may be mixed in a molar ratio of 1: 1 to 1.2. The positive electrode active material precursor and the lithium raw material may be mixed, for example, in a molar ratio of about 1:1, about 1:1.05, about 1:1.10, about 1:1.15, or about 1:1.20, but the present invention is not limited thereto.

The thermal treatment may be performed at a temperature ranging from 750 °C to 1000 °C in the case of a nickel-rich NCM-based lithium composite transition metal oxide having a nickel (Ni) content of 80 mol% or more. For example, the thermal treatment is preferably performed at a temperature ranging from 800 °C to 925 °C, and more preferably, 850 °C to 910 °C. The formation of the positive electrode active material powder in the form of a single particle and/or a pseudo-single particle is influenced by the conditions of the thermal treatment temperature. Thus, when the thermal treatment is performed at the above-described temperature, the prepared positive electrode active material powder can have a $D_{mean} \times d_{press} / D_{50}$ value of 0.5 to 3.0. Accordingly, in the case of the prepared positive electrode active material, the breakage of particles and strain in a crystal structure during a rolling process or a charging and discharging process of a lithium secondary battery including the same can be reduced, and initial resistance characteristics can be improved. However, if the thermal treatment is performed at a temperature outside of the above-described range, the active material powder may be formed as a secondary particle rather than as a single particle and/or a pseudo-single particle and may not have a $D_{mean} \times d_{press} / D_{50}$ value of 0.5 to 3.0. The appropriate thermal treatment conditions (i.e. the conditions which will produce an active material powder having a $D_{mean} \times d_{press} / D_{50}$ value of 0.5 to 3.0), may vary based on the characteristics of the positive electrode active material precursor, such as the tap density of the precursor, the composition and molar ratio of elements in the precursor, and the presence of any additives. For example, when an additive is used in the thermal treatment, the thermal treatment may be performed at a lower temperature than the above-described temperature and yet still achieve a single particle/pseudo-single particle structure and have a $D_{mean} \times d_{press} / D_{50}$ value of 0.5 to 3.0. The additive may be, for example, Zr, Mg, Sr, Y, or the like, and the appropriate lower temperature must be tailored to the identity and content of the additive in order to produce a powder having the desired $D_{mean} \times d_{press} / D_{50}$ value.

The thermal treatment may proceed under an air or oxygen atmosphere, for example, for 4 to 12 hours. Specifically, the thermal treatment may be performed, for example, for 4 hours or more, 6 hours or more, 8 hours or more, or 10 hours or more and 12 hours or less, 10 hours or less, 8 hours or less, or 6 hours or less.

Meanwhile, in order to prepare a lithium composite transition metal oxide including a $M^2$ metal, a $M^2$ metal-containing raw material may be further added in a co-precipitation or firing process. In this case, the $M^2$ metal-containing raw material may be an acetate, carbonate, nitrate, sulfate, halide, sulfide, or oxide of a $M^2$ metal.

Meanwhile, in order to form a coating layer on the surface of the lithium composite transition metal oxide, after the thermal treatment, mixing the lithium composite transition metal oxide prepared through the thermal treatment and a coating source material and thermally treating the resulting mixture may be further performed. In this case, the mixing may be performed by solid-phase mixing or liquid-phase mixing, and the thermal treatment may be performed at an appropriate temperature according to a coating source material. For example, the thermal treatment for the coating process may be performed at a temperature ranging from 200 °C to 700 °C or 300 °C to 600 °C, but the present invention is not limited thereto.

In addition, it is preferable that a washing process is not performed after the thermal treatment in the preparation of the positive electrode active material powder according to the present invention. Conventionally, it is common that a washing process is performed after thermal treatment to reduce an amount of lithium byproducts in the preparation of a nickel-rich NCM-based lithium composite transition metal oxide. However, according to research conducted by the inventors of the present invention, when a washing process is performed in the preparation of a lithium composite transition metal oxide in the form of a single particle and/or a pseudo-single particle, the surface characteristics of the lithium composite transition metal oxide are degraded in the washing process, and thus resistance is increased. Therefore, it is preferable to consume lithium remaining on the surface of the lithium composite transition metal oxide through formation of a coating layer without performing a washing process in the preparation of the positive electrode active material powder according to the present invention. As described above, when a positive electrode active material is prepared without performing washing the lithium composite transition metal oxide, an increase in resistance caused by surface defects can be suppressed.

## Positive electrode

A positive electrode according to the present invention includes the above-described positive electrode active material powder of the present invention. Specifically, the positive electrode includes a positive electrode current collector and a positive electrode active material layer formed on the positive electrode current collector, and the positive electrode active material layer includes the positive electrode active material powder according to the present invention. Since the positive electrode active material powder has been described above, the detailed description thereof will be omitted, and only the remaining components will be described in detail.

The positive electrode current collector may include a highly conductive metal and is not particularly limited as long as the positive electrode active material layer is easily adhered thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. Also, the positive electrode current collector may typically have a thickness of 3 $\mu$m to 500 $\mu$m and have fine irregularities formed on the surface thereof to increase the adhesion of the positive electrode active material. For example, the positive electrode current collector may be used in any of various forms such as a film, a sheet, a foil, a net, a porous material, a foam, a non-woven fabric, and the like.

The positive electrode active material layer may optionally include a conductive material and a binder in addition to the positive electrode active material powder, as necessary.

In this case, the positive electrode active material powder may be included in an amount of 80 to 99 wt%, more specifically, 85 to 98.5 wt% with respect to the total weight of the positive electrode active material layer. When the positive electrode active material powder is included in the above-described amount, excellent capacity characteristics can be exhibited.

The conductive material is used to impart conductivity to the electrode, and any conductive material that does not cause a chemical change in a battery and has conductivity may be used without particular limitation. Specific examples thereof include graphite such as natural graphite and artificial graphite; carbon-based materials such as carbon black, acetylene black, Ketjen black, channel black, furnace black, lamp black, thermal black, carbon fiber, and the like; powders or fibers of metals such as copper, nickel, aluminum, silver, and the like; conductive tubes such as carbon nanotubes and the like; conductive whiskers such as zinc oxide, potassium titanate, and the like; conductive metal oxides such as titanium oxide and the like; and conductive polymers such as polyphenylene derivatives and the like, which may be used alone or in combination of two or more thereof. The conductive material may be included in an amount of 0.1 to 15 wt% with respect to the total weight of the positive electrode active material layer.

The binder serves to enhance the cohesion between positive electrode active material particles and the adhesion between the positive electrode active material and the current collector. Specific examples thereof include polyvinylidene fluoride (PVDF), a polyvinylidene fluoride-hexafluoropropylene copolymer (PVDF-co-HFP), polyvinyl alcohol, polyacrylonitrile, polymethyl methacrylate, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber (SBR), fluoro-rubber, polyacrylic acid, polymers in which hydrogens thereof have been substituted with Li, Na, or Ca, and various copolymers thereof, which may be used alone or in combination of two or more thereof. The binder may be included in an amount of 0.1 to 15 wt% with respect to the total weight of the positive electrode active material layer.

The positive electrode may be manufactured by a typical method of manufacturing a positive electrode, except that the above-described positive electrode active material powder is used. Specifically, the positive electrode may be manufactured by applying, onto a positive electrode current collector, a positive electrode slurry composition prepared by dissolving or dispersing the above-described positive electrode active material powder and, optionally, a binder, a conductive material, and a dispersant in a solvent and drying and roll-pressing the same.

The solvent may be a solvent generally used in the art, and examples thereof include dimethyl sulfoxide (DMSO), isopropyl alcohol, N-methyl pyrrolidone (NMP), dimethyl formamide (DMF), acetone, water, and the like, which may be used alone or in combination of two or more thereof. The usage amount of the solvent is sufficient as long as it is able to dissolve and disperse the positive electrode active material, conductive material, binder, and dispersant considering the thickness of an applied slurry and manufacturing yield and allows a viscosity capable of exhibiting excellent thickness uniformity when applied to manufacture a positive electrode.

In addition, as another method, the positive electrode may be manufactured by laminating, on a positive electrode current collector, a film obtained by casting the positive electrode slurry composition on a separate support and removing it from the support.

**Electrochemical device**

Next, an electrochemical device according to the present invention will be described. An electrochemical device according to the present invention includes the above-described positive electrode of the present invention. The electrochemical device may specifically be a battery, a capacitor, or the like, more specifically, a lithium secondary battery.

The lithium secondary battery specifically includes a positive electrode, a negative electrode disposed to face the positive electrode, a separator interposed between the positive electrode and the negative electrode, and an electrolyte. Since the positive electrode is the same as described above, the detailed description thereof will be omitted, and only the remaining components will be described in detail.

In addition, the lithium secondary battery may optionally further include: a battery container which accommodates an electrode assembly including the positive electrode, the negative electrode, and the separator; and a sealing member which seals the battery container.

In the lithium secondary battery, the negative electrode includes a negative electrode current collector and a negative electrode active material layer positioned on the negative electrode current collector.

The negative electrode current collector is not particularly limited as long as it does not cause a chemical change in a battery and has high conductivity. For example, copper, stainless steel, aluminum, nickel, titanium, thermally treated carbon, copper or stainless steel whose surface has been treated with carbon, nickel, titanium, silver, or the like, an aluminum-cadmium alloy, or the like may be used. Also, the negative electrode current collector may typically have a thickness of 3 $\mu$m to 500 $\mu$m. Also, like the positive electrode current collector, the negative electrode current collector may have fine irregularities formed on the surface thereof to increase the adhesion of a negative electrode active material. For example, the negative electrode current collector may be used in any of various forms such as a film, a sheet, a foil, a net, a porous material, a foam, a non-woven fabric, and the like.

The negative electrode active material layer includes a negative electrode active material and, optionally, a binder and a conductive material.

As the negative electrode active material, a compound that enables the reversible intercalation and deintercalation of lithium may be used. Specific examples thereof include: carbonaceous materials such as artificial graphite, natural graphite, graphitized carbon fiber, amorphous carbon, and the like; metallic compounds capable of alloying with lithium, such as Si, Al, Sn, Pb, Zn, Bi, In, Mg, Ga, Cd, a Si alloy, a Sn alloy, an Al alloy, and the like; metal oxides capable of doping and dedoping lithium, such as $SiO_\beta$ ($0<\beta<2$), $SnO_2$, vanadium oxide, and lithium vanadium oxide; and composites including the metallic compound and the carbonaceous material, such as a Si-C composite and a Sn-C composite, which may be used alone or in combination of two or more thereof. In addition, a lithium metal thin film may be used as the negative electrode active material. Additionally, as a carbon material, both low-crystallinity carbon and high-crystallinity carbon may be used. Representative examples of the low-crystallinity carbon include soft carbon and hard carbon, and representative examples of the high-crystallinity carbon include amorphous, platy, flaky, spherical or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch-derived cokes, and the like.

The negative electrode active material may be included in an amount of 80 wt% to 99 wt% with respect to the total weight of the negative electrode active material layer.

The binder serves to assist bonding between the conductive material, the active material, and the current collector and is typically included in an amount of 0.1 wt% to 10 wt% with respect to the total weight of the negative electrode active material layer. Examples of the binder include polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber, nitrile butadiene rubber, fluorine rubber, and various copolymers thereof.

The conductive material is a component for enhancing the conductivity of the negative electrode active material and may be included in an amount of 10 wt% or less, and preferably, 5 wt% or less with respect to the total weight of the negative electrode active material layer. Such a conductive material is not particularly limited as long as it does not cause a chemical change in a battery and has conductivity. For example, graphite such as natural graphite, artificial graphite, or the like; carbon black such as acetylene black, Ketjen black, channel black, furnace black, lamp black, thermal black, or the like; a conductive fiber such as a carbon fiber, a metal fiber, or the like; carbon fluoride; a metal powder containing aluminum, nickel, or the like; a conductive whisker such as zinc oxide, potassium titanate, or the like; a conductive metal oxide such as titanium oxide or the like; or a conductive material such as a polyphenylene derivative or the like may be used.

The negative electrode active material layer may be formed by applying, onto a negative electrode current collector, a negative electrode slurry composition prepared by dissolving or dispersing a negative electrode active material and, optionally, a binder and a conductive material in a solvent and drying the same, or by laminating, on a negative electrode current collector, a film obtained by casting the negative electrode slurry composition on a separate support and removing it from the support.

Meanwhile, in the lithium secondary battery, the separator serves to separate the negative electrode and the positive electrode and provide a passage for lithium ion migration. As the separator, any separator that is typically used in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer, or the like or a stacked structure having two or more layers thereof, may be used. In addition, a typical porous non-woven fabric, for example, a non-woven fabric made of high-melting-point glass fiber, polyethylene terephthalate fiber, or the like may be used. Also, to ensure heat resistance or mechanical strength, a coated separator which includes a ceramic component or polymer material and is optionally in a single-layer or multi-layer structure may be used.

In addition, as the electrolyte used in the present invention, an organic liquid electrolyte, an inorganic liquid electrolyte, a solid polymer electrolyte, a gel-type polymer electrolyte, an inorganic solid electrolyte, a molten-type inorganic electrolyte, or the like, which is usable in the fabrication of a lithium secondary battery, may be used, but the present invention is not limited thereto.

Specifically, the electrolyte may include an organic solvent and a lithium salt.

As the organic solvent, any organic solvent that may function as a medium through which ions involved in an electrochemical reaction of the battery can migrate may be used without particular limitation. Specifically, the organic solvent may be: an ester-based solvent such as methyl acetate, ethyl acetate, $\gamma$-butyrolactone, $\varepsilon$-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like; an alcohol-based solvent such as ethyl alcohol, isopropyl alcohol, or the like; a nitrile such as R-CN (R is a C2-C20 hydrocarbon group with a linear, branched or cyclic structure and may include a double-bonded aromatic ring or an ether linkage) or the like; an amide such as dimethylformamide or the like; dioxolane such as 1,3-dioxolane or the like; or sulfolane. Among those listed above, the carbonate-based solvent is preferred, and a mixture of a cyclic carbonate-based compound with high ion conductivity and high permittivity (e.g., EC, PC, etc.) and a linear carbonate-based compound with low viscosity (e.g., EMC, DMC, DEC, etc.), which may increase the charging/discharging performance of the battery, is more preferred.

As the lithium salt, any compound that may provide lithium ions used in a lithium secondary battery may be used without particular limitation. Specifically, at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used as the lithium salt. The lithium salt is preferably used at a concentration ranging from 0.1 M to 2.0 M. When the concentration of the lithium salt falls within the above-described range, the electrolyte has appropriate levels of conductivity and viscosity, and thus excellent electrolyte performance can be exhibited, and lithium ions can effectively migrate.

In addition to the above-described electrolyte components, the electrolyte may further include at least one additive selected from a haloalkylene carbonate-based compound such as difluoroethylene carbonate and the like, pyridine, triethylphosphite, triethanolamine, cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, aluminum trichloride, and the like for the purpose of enhancing the lifetime characteristics of the battery, suppressing a reduction in battery capacity, enhancing the discharge capacity of the battery, or the like. In this case, the additive may be included in an amount of 0.1 wt% to 5 wt% with respect to the total weight of the electrolyte.

## BEST MODE FOR CARRYING OUT THE INVENTION

Hereinafter, the present invention will be described in detail with reference to examples so that those skilled in the art can easily carry out the present invention. However, the present invention may be embodied in several different forms, and therefore, is not limited to examples described herein.

**Example 1**

4 L of distilled water was input into to a co-precipitation reactor (capacity: 20 L). Then, while maintaining a temperature of 50 °C, a 3.2 mol/L transition metal solution, in which $NiSO_4$, $CoSO_4$, and $MnSO_4$ were mixed so that a molar ratio of nickel:cobalt:manganese was 0.83:0.11:0.06, and a 28 wt% aqueous ammonia solution were continuously added to the reactor at 300 mL/hr and 42 mL/hr, respectively. The stirring speed of an impeller was set to 400 rpm, and a 40 wt% sodium hydroxide solution was added to maintain a pH of 9.3. Then, co-precipitation was performed for 10 hours to form precursor particles, and the precursor particles were separated, washed, and then dried in an oven set at 130 °C to prepare a precursor (tap density: 1.8 g/cc).

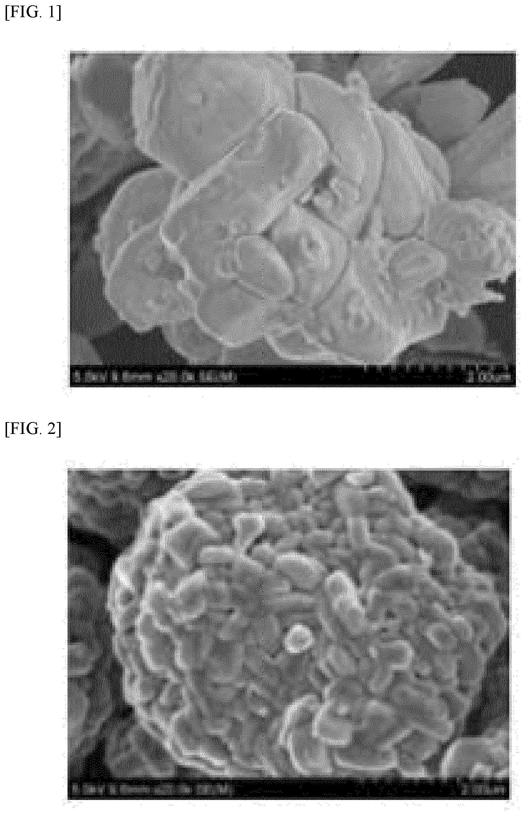

The $Ni_{0.83}Co_{0.11}Mn_{0.06}(OH)_2$ precursor synthesized by the co-precipitation was mixed with LiOH so that a molar ratio of Li/Me(Ni+Co+Mn) became 1.05, and the resulting mixture was thermally treated under an oxygen atmosphere at 870 °C for 10 hours to prepare a positive electrode active material powder with a $LiNi_{0.83}Co_{0.11}Mn_{0.06}O_2$ composition. A scanning electron microscope (SEM) image of the prepared positive electrode active material powder is shown in FIG. 1.

Example 2

A positive electrode active material powder was prepared in the same manner as in Example 1, except that the $Ni_{0.83}Co_{0.11}Mn_{0.06}(OH)_2$ precursor was mixed with LiOH so that a molar ratio of Li/Me(Ni, Co, Mn) was 1.05, and the resulting mixture was thermally treated under an oxygen atmosphere at 900 °C for 10 hours.

**Comparative Example 1**

A positive electrode active material powder was prepared in the same manner as in Example 1, except that the $Ni_{0.83}Co_{0.11}Mn_{0.06}(OH)_2$ precursor was mixed with LiOH so that a molar ratio of Li/Me(Ni, Co, Mn) was 1.05, and the resulting mixture was thermally treated under an oxygen atmosphere at 780 °C for 10 hours. An SEM image of the prepared positive electrode active material powder is shown in FIG. 2.

**Comparative Example 2**

A positive electrode active material powder was prepared in the same manner as in Example 1, except that the $Ni_{0.83}Co_{0.11}Mn_{0.06}(OH)_2$ precursor was mixed with LiOH so that a molar ratio of Li/Me(Ni, Co, Mn) was 1.05, and the resulting mixture was thermally treated under an oxygen atmosphere at 950 °C for 10 hours.

**Experimental Example 1**

The $D_{mean}$, $d_{press}$, and $D_{50}$ of each positive electrode active material powder prepared in Examples 1 and 2 and Comparative Examples 1 and 2 were measured, and a value of $D_{mean} \times d_{press} / D_{50}$ was calculated.

$D_{mean}$ is an average particle diameter of nodule as measured using an electron backscatter diffraction (EBSD) pattern analyzer, $d_{press}$ is a press density measured after 5 g of the positive electrode active material powder is input into a circular mold with a diameter of 2 cm and roll-pressed at a pressure of 2000 kgf, and $D_{50}$ is a value corresponding to a cumulative volume of 50% in the particle size distribution as measured by a laser diffraction method.

[Table 1]

| | Example 1 | Example 2 | Comparative Example 1 | Comparative Example 2 |
|---|---|---|---|---|
| $D_{mean}$ | 1.2 | 3 | 0.4 | 4 |
| $d_{press}$ | 3.12 | 3.22 | 2.55 | 3.35 |
| $D_{50}$ | 3.4 | 3.5 | 3.45 | 4.3 |
| $D_{mean} \times d_{press} / D_{50}$ value | 1.10 | 2.76 | 0.30 | 3.12 |

It can be confirmed that Examples 1 and 2 satisfied $0.5 \leq D_{mean} \times d_{press} / D_{50} \leq 3$, whereas Comparative Example 1 exhibited a $D_{mean} \times d_{press} / D_{50}$ value of less than 0.5, and Comparative Example 2 exhibited a $D_{mean} \times d_{press} / D_{50}$ value of more than 3.

**Experimental Example 2**

The full width at half maximum (FWHM) of a (003) peak of each positive electrode active material powder prepared in Example 1 and Comparative Example 1 was measured through X-ray diffraction (XRD) by the following method, and a (003) peak FWHM change rate was calculated using the measurement result.

First, a coin cell including the positive electrode active material powder was fabricated. In this case, the coin cell was fabricated as a coin cell for operando XRD with a Kapton film window for XRD analysis. Then, in-situ XRD was measured in a transmission mode while charging and discharging the coin cell. In the XRD measurement, Mo target X-rays were used as a light source, and measurement was made by 2-theta scanning in a transmission mode. A $1^{st}$ slit of 1/4 degree, a Soller slit (both $1^{st}$ and $2^{nd}$) of 0.02 rad, and a $2^{nd}$ mask of 1.68 mm were used. The 7 degrees to 30 degrees area in 2-theta was measured every 0.014 degree so that it was about 6 minutes per scan. In the measurement, charging and discharging proceeded at 0.05C, the CV state was maintained for an hour after measurement was made up to 4.25 V, and then discharging was performed up to 2.5 V A high-energy XRD Empyrean was used as a measurement instrument.

The (003) peak FWHM change rate was calculated by [{(003) peak FWHM at SOC 60% - (003) peak FWHM at SOC 0%} / {(003) peak FWHM at SOC 0%}] $\times$ 100

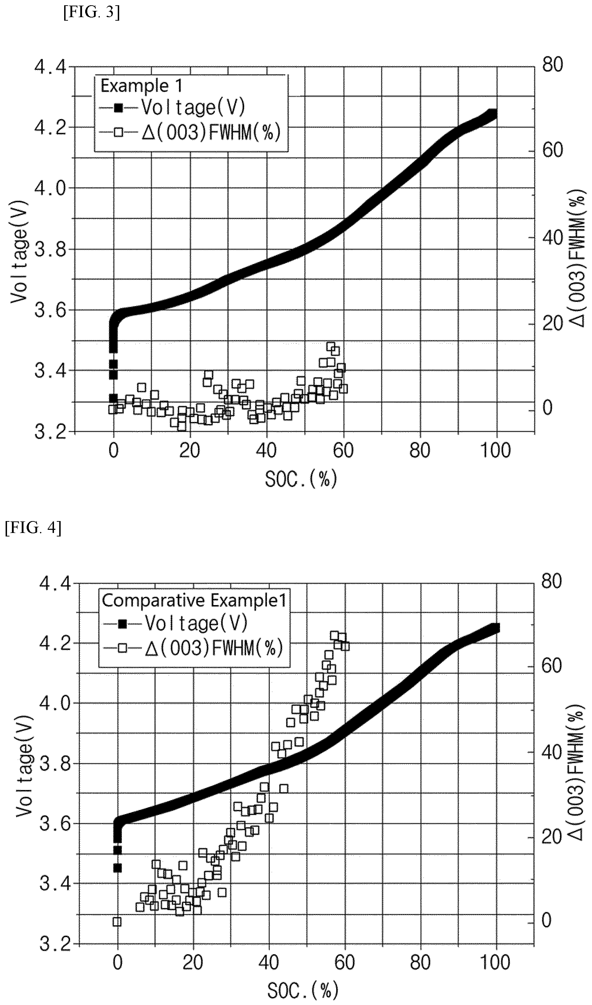

Measurement results are shown in FIG. 3 and FIG. 4. FIG. 3 and FIG. 4 are graphs showing the FWHM change rate of the positive electrode active material powder of Example 1 and Comparative Example 1, respectively, according to a SOC.

Referring to FIG. 3 and FIG. 4, it can be confirmed that Example 1 exhibited a (003) peak FWHM change rate of 15% or less, and Comparative Example 1 exhibited a (003) peak FWHM change rate of more than 60%. Accordingly, in the case of Example 1, it can be seen that there was almost no change in a crystal size and strain in the structure even when it is charged to SOC 60% or discharged to SOC 0%, and the breakage of particles and stress applied to the crystal structure during charging and discharging are reduced.

**Experimental Example 3**

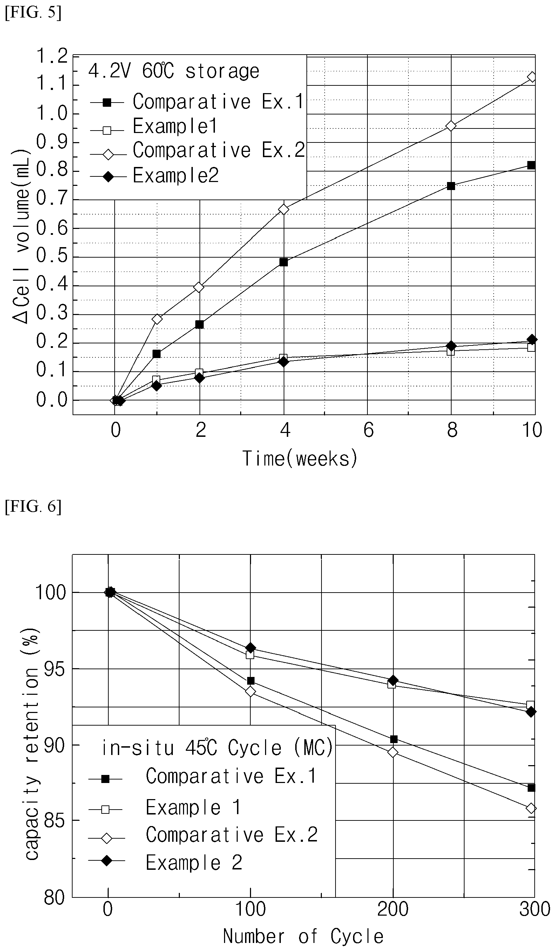

A coin half-cell including each positive electrode active material powder prepared in Examples 1 and 2 and Comparative Examples 1 and 2 was fabricated and then charged to 4.25 V Then, two electrodes (loading amount: 400 mg) charged at 4.25 V and one separator were placed on the lower plate of the coin cell and fixed with a gasket, then 15 ul of an electrolyte (DEC REF.) was vacuum-injected two times, and each side was vacuum-sealed to a thickness of 1 cm using a 6.5×5 cm aluminum pouch (Al pouch). In this case, vacuum sealing means monocell vacuum sealing under the condition of 95 kPa/93 kPa. Afterward, the coin half-cell fabricated as described above was stored in a convection oven set at 60 °C for 8 weeks, a gas generation amount was evaluated by comparing a cell volume variation, and results thereof are shown in FIG. 5.

Referring to FIG. 5, the cells using the positive electrode active material powders according to Examples 1 and 2 exhibited cell volume variations of 0.2 mL or less after the 8-week storage, which were substantially lower than those of the cells using the positive electrode active material powders according to Comparative Examples 1 and 2. This shows that, when the positive electrode active material powder according to the present invention is applied, the high-temperature storage characteristics of the battery are improved.

**Experimental Example 4**

A monocell including a positive electrode and a negative electrode was fabricated. The positive electrode was manufactured by applying each positive electrode active material powder prepared in Examples 1 and 2 and Comparative Examples 1 and 2 onto a current collector and drying the same. The negative electrode was manufactured using a 5:5 mixture of natural graphite and artificial graphite as a negative electrode active material so that 95.6 wt% of the negative electrode active material, 0.9 wt% of a conductive material, and 3.4 wt% of a binder were included. The loading of the negative electrode was 10.7 mg/cm$^2$, and an N/P ratio of the negative electrode and the positive electrode was fixed at 1.08.

The capacity retention rate (%) of the monocell including each positive electrode active material powder prepared in Examples 1 and 2 and Comparative Examples 1 and 2 was measured at 45 °C for 300 cycles, and results thereof are shown in FIG. 6.

Referring to FIG. 6, it can be confirmed that, under the condition of 300 cycles, the monocells using the positive electrode active material powders prepared in Examples 1 and 2 exhibited capacity retention rates of 92% or more, whereas monocells using the positive electrode active material powders prepared in Comparative Examples 1 and 2 exhibited capacity retention rates of 87% and 85%, respectively. That is, it can be seen that, when the positive electrode active material powder according to the present invention is applied, high-temperature lifetime characteristics are improved.

**Experimental Example 5** - **Measurement of initial resistance value**

A coin half-cell including each positive electrode active material powder prepared in Examples 1 and 2 and Comparative Examples 1 and 2 was fabricated, and the initial resistance value thereof was measured. The initial resistance value was calculated as a voltage change rate when a current of 1C was applied for 60 seconds after 0.2C and SOC 10% were set in the 2$^{nd}$ cycle based on the 1$^{st}$ cycle discharge capacity measured at 0.1C.

The initial resistance values of Examples 1 and 2 and Comparative Examples 1 and 2 are shown in the following Table 2.

[Table 2]

| Units: $\Omega$ | Example 1 | Example 2 | Comparative Example 1 | Comparative Example 2 |
|---|---|---|---|---|
| Initial resistance (SOC 10%) | 16.5 | 22.2 | 24.5 | 35.2 |

Referring the result of Table 2, when the positive electrode active material powders prepared in Examples 1 and 2 were applied, initial resistance values at SOC 10% were found to be lower than those when the positive electrode active material powders prepared in Comparative Examples 1 and 2 were applied. Accordingly, it can be seen that, when the positive electrode active material powder according to the present invention is applied to a battery, initial resistance characteristics are improved.

**Claims**

1. A positive electrode active material powder for a lithium secondary battery, comprising a lithium composite transition metal oxide in the form of at least one of a single particle consisting of one nodule, and a pseudo-single particle which is a composite of 30 or less nodules,

    wherein the positive electrode active material powder satisfies the following Expression 1:

    [Expression 1]

    $$0.5 \leq D_{mean} \times d_{press} / D_{50} \leq 3$$

    wherein $D_{mean}$ is an average particle diameter of the nodules as measured using an electron backscatter diffraction (EBSD) pattern analyzer,
    $d_{press}$ is a press density measured after 5 g of the positive electrode active material powder is input into a circular mold with a diameter of 2 cm and pressurized at a pressure of 2000 kgf, and
    $D_{50}$ is a value corresponding to a cumulative volume of 50% in the particle size distribution of the positive electrode active material powder.

2. The positive electrode active material powder of claim 1, wherein the lithium composite transition metal oxide has a composition represented by the following Chemical Formula 1:

    [Chemical Formula 1]    $Li_{1+x}Ni_aCo_bM^1{}_cM^2{}_dO_2$

    in Chemical Formula 1,
    $M^1$ is Mn, Al, or a combination thereof, $M^2$ is one or more selected from the group consisting of W, Zr, Y, Ba, Ca, Ti, Mg, Ta, and Nb, and $0 \leq x \leq 0.5$, $0.8 \leq a < 1$, $0 < b < 0.2$, $0 < c < 0.2$, and $0 \leq d \leq 0.05$ are satisfied.

3. The positive electrode active material powder of claim 2, wherein, in the Chemical Formula 1, $0.82 \leq a \leq 0.95$ is satisfied.

4. The positive electrode active material powder of claim 1, wherein the positive electrode active material powder has a rate of change in a full width at half maximum (FWHM) of a (003) peak of 25% or less as represented by the following Expression 2:

$$\text{(003) peak FWHM change rate} = [\{(003) \text{ peak FWHM at SOC } 60\% - (003) \text{ peak FWHM at SOC } 0\%\} / \{(003 \text{ peak FWHM at SOC } 0\%\}] \times 100. \qquad \text{[Expression 2]}$$

5. The positive electrode active material powder of claim 4, wherein the positive electrode active material powder has a (003) peak FWHM change rate of 15% or less.

6. The positive electrode active material powder of claim 1, wherein the $D_{mean}$ is 0.5 to 3.5 $\mu$m.

7. The positive electrode active material powder of claim 1, wherein the $d_{press}$ is 3 to 5 g/cc.

8. The positive electrode active material powder of claim 1, wherein the lithium composite transition metal oxide further includes a coating layer including one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si, and S, disposed on a particle surface thereof in the form of at least one of the single particle and the pseudo-single particle.

9. The positive electrode active material powder of claim 1, wherein the positive electrode active material powder has a BET specific surface area of 0.1 m$^2$/g to 1 m$^2$/g.

10. A positive electrode for a lithium secondary battery, comprising the positive electrode active material powder according to any one of claim 1 to claim 9.

11. A lithium secondary battery comprising the positive electrode according to claim 10.

[FIG. 1]

[FIG. 2]

[FIG. 3]

[FIG. 4]

[FIG. 5]

[FIG. 6]

<div style="text-align:center">**INTERNATIONAL SEARCH REPORT**</div>

| International application No. |
| --- |
| **PCT/KR2022/013556** |

## A.    CLASSIFICATION OF SUBJECT MATTER

**H01M 4/525**(2010.01)i; **H01M 4/505**(2010.01)i; **H01M 4/36**(2006.01)i; **H01M 4/62**(2006.01)i; **H01M 10/052**(2010.01)i; **C01G 53/00**(2006.01)i

According to International Patent Classification (IPC) or to both national classification and IPC

## B.    FIELDS SEARCHED

Minimum documentation searched (classification system followed by classification symbols)

H01M 4/525(2010.01); H01M 10/05(2010.01); H01M 10/052(2010.01); H01M 10/0525(2010.01); H01M 4/36(2006.01); H01M 4/48(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 노듈(nodule), 열처리 (heat treatment), 전이금속 산화물(transition metal oxide)

## C.    DOCUMENTS CONSIDERED TO BE RELEVANT

| Category* | Citation of document, with indication, where appropriate, of the relevant passages | Relevant to claim No. |
| --- | --- | --- |
| A | JP 2019-200991 A (SAMSUNG SDI CO., LTD.) 21 November 2019 (2019-11-21)<br>See claims 1 and 5; and paragraph [0008]. | 1-11 |
| A | KR 10-1883406 B1 (RESEARCH INSTITUTE OF INDUSTRIAL SCIENCE & TECHNOLOGY) 30 July 2018 (2018-07-30)<br>See entire document. | 1-11 |
| A | KR 10-2017-0142393 A (LG CHEM, LTD.) 28 December 2017 (2017-12-28)<br>See entire document. | 1-11 |
| A | KR 10-2008-0043347 A (TODA KOGYO EUROPE GMBH) 16 May 2008 (2008-05-16)<br>See entire document. | 1-11 |
| A | KR 10-2015-0040429 A (HYUNDAI MOTOR COMPANY) 15 April 2015 (2015-04-15)<br>See entire document. | 1-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 December 2022** | **15 December 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br>**PCT/KR2022/013556** | | | |
|---|---|---|---|---|---|---|---|
| Patent document<br>cited in search report | | | Publication date<br>(day/month/year) | Patent family member(s) | | | Publication date<br>(day/month/year) |
| JP | 2019-200991 | A | 21 November 2019 | CN | 110492064 | A | 22 November 2019 |
| | | | | CN | 110492064 | B | 31 May 2022 |
| | | | | EP | 3575269 | A1 | 04 December 2019 |
| | | | | JP | 6929898 | B2 | 01 September 2021 |
| | | | | KR | 10-2019-0130932 | A | 25 November 2019 |
| | | | | US | 11152610 | B2 | 19 October 2021 |
| | | | | US | 2019-0355981 | A1 | 21 November 2019 |
| | | | | US | 2022-0029154 | A1 | 27 January 2022 |
| KR | 10-1883406 | B1 | 30 July 2018 | None | | | |
| KR | 10-2017-0142393 | A | 28 December 2017 | None | | | |
| KR | 10-2008-0043347 | A | 16 May 2008 | CA | 2618780 | A1 | 22 February 2007 |
| | | | | CA | 2618780 | C | 20 October 2015 |
| | | | | CN | 101282911 | A | 08 October 2008 |
| | | | | CN | 105129870 | A | 09 December 2015 |
| | | | | EP | 1912899 | A1 | 23 April 2008 |
| | | | | EP | 1912899 | B1 | 10 October 2012 |
| | | | | JP | 2009-515799 | A | 16 April 2009 |
| | | | | JP | 2013-056827 | A | 28 March 2013 |
| | | | | JP | 5353239 | B2 | 27 November 2013 |
| | | | | JP | 5716001 | B2 | 13 May 2015 |
| | | | | KR | 10-1306532 | B1 | 09 September 2013 |
| | | | | US | 10326133 | B2 | 18 June 2019 |
| | | | | US | 2009-0302267 | A1 | 10 December 2009 |
| | | | | US | 2012-0305861 | A1 | 06 December 2012 |
| | | | | US | 2017-0033358 | A1 | 02 February 2017 |
| | | | | WO | 2007-019986 | A1 | 22 February 2007 |
| KR | 10-2015-0040429 | A | 15 April 2015 | CN | 100219237 | A | 09 June 1999 |
| | | | | KR | 10-1550974 | B1 | 07 September 2015 |

Form PCT/ISA/210 (patent family annex) (July 2022)

**EP 4 383 372 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210121307